# EUROPEAN PATENT APPLICATION

(11) **EP 3 736 668 A1**
(43) Date of publication of application: **11.11.2020**
(21) Application number: 19173749.3
(22) Date of filing: 10.05.2019
(51) Int. Cl.: G06F 3/01

(54) **RENDERING VISUAL INFORMATION REGARDING AN APPARATUS**

(71) Applicant: ABB Schweiz AG, 5400 Baden (CH)
(72) Inventor: Zhongliang, Hu, 00380 Helsinki (FI); Kohvakka, Mikko, 00380 Helsinki (FI); Tanila, Teemu, 00380 Helsinki (FI)
(74) Representative: Kolster Oy Ab

(57) **Abstract**

A method comprising determining, by a first apparatus, that a connection is to be established between the first apparatus and a second apparatus, establishing the connection, receiving, by the first apparatus from the second apparatus, data to be rendered as a visual augmented reality object, receiving, by the first apparatus, data regarding a location associated with the second apparatus, and rendering the visual augmented reality object at the location.

## Description

### TECHNICAL FIELD

The present application relates to rendering visual content indicative of information associated with an apparatus.

### BACKGROUND

Augmented reality enables virtual objects to be rendered such that those may be perceived as part of a view thereby enhancing an environment a user is looking at. This provides opportunities that may help a user to interact with the environment and may also provide information relevant to an object, that may be a device, in the environment.

### BRIEF DESCRIPTION

According to an aspect there is provided a method comprising determining, by a first apparatus, that a connection is to be established between the first apparatus and a second apparatus, establishing the connection, receiving, by the first apparatus from the second apparatus, data to be rendered as a visual augmented reality object, receiving, by the first apparatus, data regarding a location associated with the second apparatus, and rendering the visual augmented reality object at the location.

According to an aspect there is provided an apparatus comprising at least one processor, and at least one memory including a computer program code, wherein the at least one memory and the computer program code are configured, with the at least one processor, to cause the apparatus to determine, by a first apparatus, that a connection is to be established between the apparatus and a second apparatus, establish the connection, receive from the second apparatus data to be rendered as a visual augmented reality object, receive data regarding a location associated with the second apparatus, and render the visual augmented reality object at the location.

According to an aspect there is provided an apparatus comprising means for determining that a connection is to be established between the apparatus and a second apparatus, establishing the connection, receiving, from the second apparatus, data to be rendered as a visual augmented reality object, receiving data regarding a location associated with the second apparatus, and rendering the visual augmented reality object at the location.

According to another aspect there is provided a system comprising a first apparatus and a second apparatus, wherein the system is configured to perform determining, by the first apparatus, that a connection is to be established between the first apparatus and the second apparatus, establishing the connection, receiving, by the first apparatus from the second apparatus, data to be rendered as a visual augmented reality object, receiving, by the first apparatus, data regarding a location associated with the second apparatus, and rendering the visual augmented reality object at the location.

According to an aspect there is provided a computer a computer program product which when executed by a computing apparatus causes the apparatus to perform determining, by a first apparatus, that a connection is to be established between the first apparatus and a second apparatus, establishing the connection, receiving, by the first apparatus from the second apparatus, data to be rendered as a visual augmented reality object, receiving, by the first apparatus, data regarding a location associated with the second apparatus, and rendering the visual augmented reality object at the location.

According to another aspect there is provided a computer program product comprising computer program code stored in a non-transitory memory medium, the computer program code being configured to cause an apparatus, when executing the program code by a processor circuitry, to perform at least the following: determining, by a first apparatus, that a connection is to be established between the first apparatus and a second apparatus, establishing the connection, receiving, by the first apparatus from the second apparatus, data to be rendered as a visual augmented reality object, receiving, by the first apparatus, data regarding a location associated with the second apparatus, and rendering the visual augmented reality object at the location.

### BRIEF DESCRIPTION OF THE DRAWINGS

Figure 1 illustrates an exemplary embodiment of an apparatus;
Figure 2 illustrates an exemplary embodiment of eye tracking;
Figures 3a - 3c illustrate an exemplary embodiment of a connection between two apparatuses;
Figure 4 illustrates a flow chart according to an exemplary embodiment;
Figure 5 illustrates an exemplary embodiment of an apparatus.

### DETAILED DESCRIPTION

An apparatus, such as an automation device or a vehicle for example, can contain a component that is associated with a value that describes the functioning of that component. The value may be a value of a parameter for example. The value may be stored in a memory of the apparatus and therefore may be in a digital format. In order to be able to monitor such an apparatus, it would be beneficial to know the value. It is to be noted that although one value is mentioned here, there can be a plurality of values associated with a component of the apparatus and the apparatus may comprise more than one components that are associated with one or more values. Yet, for the sake of ease of understanding, a value is referred to herein.

In some circumstances, like if the apparatus is a vehicle or an automation device in an industrial environment, having the value available for use outside of the apparatus may not be easy. For example, the apparatus may comprise many parts that are not visible to a user looking at the apparatus from outside and/or the apparatus is in such an environment that it may not be safe to go right next to the apparatus. Further, the apparatus may be located in a place that has weak or no connection to the Internet. Yet, there is a need for a user such as an engineer or a maintenance person to know the value. Thus, there is a need to connect to the apparatus using another device and access the value using the connection between the two apparatuses.

The connection may be wired but it may also be a wireless connection. Wireless connection may be achieved for example by using Bluetooth technology. Bluetooth technology is based on low-range radio connectivity technology and follows a protocol stack defined for Bluetooth. Bluetooth is based on point-to-point connectivity meaning that two devices connect directly with each other using the Bluetooth protocol. One of the devices is defined as the master and the other one is a slave. It is to be noted that the master may have several different Bluetooth connections to different slave devices.

Another wireless connectivity technology that may be used is Wireless Fidelity, Wi-Fi, which is a technology based on IEEE 802.11 standards. Wi-Fi enables a device to connect to a wireless local area network provided by a local access point that may also provide a connection to the Internet. Wi-Fi may also provide an ad-hoc mode that enables devices to connect directly to each other. It is to be noted that Bluetooth and Wi-Fi are examples of wireless connectivity that may be used and that other technologies for wireless connectivity could be used as well. For example, cellular communication network based technologies could also be used. The cellular communication network may follow a standard such as a 3GPP standard. The 3GPP standards include for example Universal Mobile Telecommunication System, UMTS, and its related 3G standards, Long Term Evolution, LTE, LTE Advanced and Next generation, 5G, standards. In some examples, 5G may operate using a short range and low power mode.

Augmented reality provides an enhanced user experience by enhancing a physical environment by rendering computer-generated content. The computer-generated content may comprise visual content that comprises one or more visual objects, audio content and/or haptic feedback provided to the user. Yet, the user may still sense the surrounding physical environment and thereby is not fully immersed into the augmented reality content.

In some exemplary embodiments, an apparatus capable of providing augmented reality content may be configured to use a camera, which may be comprised in or connected to the apparatus, to detect a marker in the surrounding physical environment. The marker may be a visual element such as a bar code or a QR code that is then recognized by the apparatus from the image produced by the camera. The marker may then be determined as an indicator that augmented reality content is to be rendered at the location of the marker and the apparatus may thus, after recognizing the marker, render augmented reality content at the location of the marker.

In some exemplary embodiments, the apparatus capable of providing augmented reality content may be configured to utilize sensor information to detect a location. Such sensors may include for example a global positioning signal, GPS, receiver, a digital compass, a velocity meter, or an accelerometer. The apparatus determines its location based on the information received from the sensors and renders augmented reality content to a location that is associated with augmented reality content.

In some exemplary embodiments, the apparatus capable of providing augmented reality content may be configured to project augmented reality content onto a surface of a surrounding physical environment. Alternatively, the projection may be done into mid-air as a hologram. The projection comprises visible light that can be perceived by a user. The user may then further interact with the projected visual augmented reality content if the user interaction such as a touch input is then further detected by for example monitoring a camera feed from which the user input may be detected.

In some exemplary embodiments, the apparatus capable of providing augmented reality content may be configured to render visual augmented reality content such that the rendered content is superimposed to a view of the surrounding physical environment. For example, an object in the surrounding physical world may be replaced with a visual augmented reality content by superimposing the visual augmented reality content to the position of the object. This may be done for example by utilizing object recognition capabilities of the apparatus.

Mixed reality provides a user experience similar to augmented reality, but in mixed reality the added computer-generated content may be anchored to the real-world content and may be perceived to interact with real-world objects. For the purpose of easier explanation an umbrella-term augmented reality is used from hereon and the term is to cover both augmented reality and mixed reality.

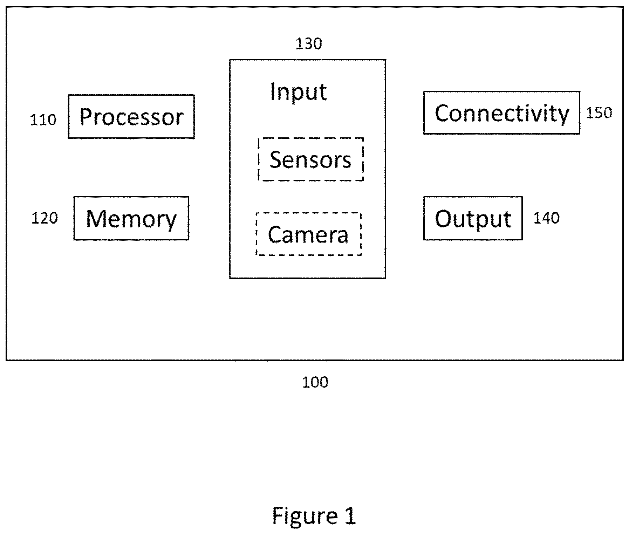

Various types of apparatuses may be configured to render augmented reality content. Examples of such apparatuses comprise mobile devices, such as a mobile phone, a laptop computer or a tablet computer, head-mounted displays and smart glasses as well as smart contact lenses. Figure 1 illustrates an exemplary embodiment of an apparatus (100) capable of rendering augmented reality content. The units illustrated in Figure 1 are logical units illustrating the functionalities of the apparatus (100) and the implementation of the functionalities may vary in different embodiments.

The apparatus 100 comprises a processor 110. The processor 110 interprets computer program instructions and processes data. The processor 110 may comprise one or more programmable processors. The processor 110 may comprise programmable hardware with embedded firmware and may, alternatively or additionally, comprise one or more application specific integrated circuits, ASICs.

The processor 110 is coupled to a memory 120. The processor is configured to read and write data to and from the memory 120. The memory 120 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 120 further stores computer readable instructions that are execute by the processor 110. For example, non-volatile memory stores the computer readable instructions and the processor 110 executes the instructions using volatile memory for temporary storage of data and/or instructions. The memory may also save data such as values.

The computer readable instructions may have been pre-stored to the memory 120 or, alternatively or additionally, they may be received, by the apparatus, via electromagnetic carrier signal and/or may be copied from a physical entity such as computer program product. Execution of the computer readable instructions causes the apparatus 100 to perform various functionalities such as those described in example embodiments of this document.

In the context of this document, a memory or computer-readable media may be any non-transitory media or means that can contain, store, communicate, propagate or transport the instructions for use by or in connection with an instruction execution system, apparatus, or device, such as a computer.

The apparatus 100 further comprises, or is connected to, an input unit 130. The input unit 130 comprises one or more interfaces for receiving input such as user input. The one or more interfaces may comprise for example one or more motion and/or orientation sensors, one or more cameras, one or more accelerometers, one or more microphones, one or more buttons and one or more touch detection units. Further, the input unit 130 may comprise an interface to which external devices may connect to.

The apparatus 100 also comprises an output unit 140. The output unit comprises or is connected to one or more displays capable of rendering visual content such as a light emitting diode, LED, display, a liquid crystal display, LCD and a liquid crystal on silicon, LCoS, display. The output unit 640 may comprise two displays to render stereoscopic visual content. One display to render content to the left eye and the other display to render content to the right eye. The output unit 140 may further comprise a transmission unit, such as one or more waveguides or one or more lenses, to transfer the rendered visual content to the user's field of view. The output unit 140 may further comprise one or more audio outputs. The one or more audio outputs may be for example loudspeakers or a set of headphones.

The apparatus 100 may further comprise a connectivity unit 150. The connectivity unit 150 enables wired and/or wireless connectivity to external networks such as Bluetooth, Wi-Fi or 5G. The connectivity unit 150 may comprise one or more antennas and one or more receivers that may be integrated to the apparatus 100 or the apparatus 100 may be connected to. The connectivity unit 150 may comprise an integrated circuit or a set of integrated circuits that provide the wireless communication capability for the apparatus 100. Alternatively, the wireless connectivity may be a hardwired application specific integrated circuit, ASIC.

It is to be noted that the apparatus 100 may further comprise various component not illustrated in the Figure 1. The various components may be hardware component and/or software components or a combination thereof.

If visual augmented reality content is rendered, it is beneficial to be aware of where the user is looking at. This way the user experience may be enhanced as content may be rendered in a more user-friendly manner and user interaction based on where the user is looking at may be enabled. Eye tracking, which may also be called as gaze tracking, may be utilized to detect what the user is looking at.

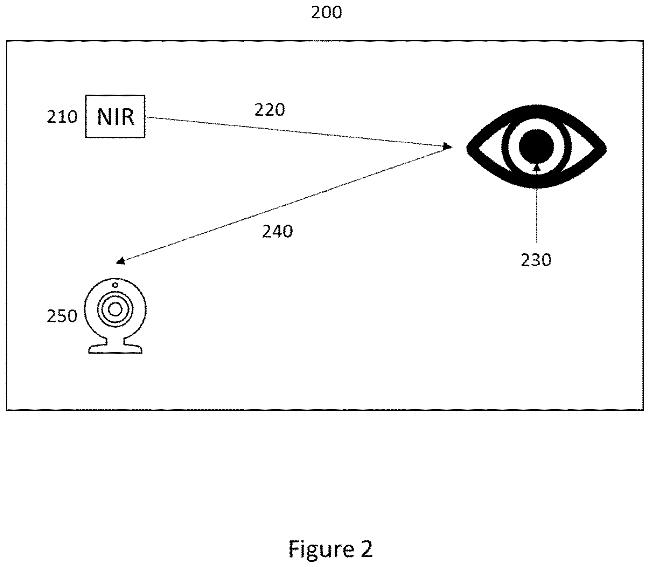

Figure 2 illustrates an exemplary embodiment of eye tracking 200. In some exemplary embodiments, the eye tracking 200, is comprised in an apparatus capable of rendering augmented reality content such as an apparatus 100. In the exemplary embodiment of Figure 2, the eye tracking 200 comprises a light source 210, which may be for example a micro projector mounted on the apparatus that may be a head mounted device. The light source 210 projects light 220, which may be infrared or near-infrared, NIR, light and projects the light 220 towards a pupil of the user 230. The projected light 220 may have a form of a dot or it may form a pattern. The pupil of the user then produces a reflection 240 of the light 220 projected to it. The reflection is then captured by a sensor 250 which may be a camera capable of capturing high-frame-rate images. The captured reflections may then be analysed and based on the analysis it may be determined at what the user is looking at and, additionally, for how long a user is looking at a certain object or area. The determination may be achieved by using an image processing algorithm for example and the determination may be done by the apparatus performing the gaze tracking or by an apparatus connected to the apparatus performing the gaze tracking.

If augmented reality content is to be rendered such that it is associated to an object in the surrounding physical environment, it may be beneficial to recognize automatically the associated object. In some exemplary embodiments, this may be achieved by obtaining an image or a sequence of images from a camera and then determining, from the image or the image feed, one or more objects present in the image or image feed. Various methods may be applied to determine the one or more objects including image recognition algorithms. Machine learning algorithms may also be used to better determine objects present in the image or the sequence of images. Alternatively, or additionally, marker-based recognition may be used as described above.

Some apparatuses may have one or more components that need to be commissioned and/or maintained. Such apparatuses may be automation devices in an industrial environment but are not limited to those. If such an apparatus has a housing that encloses one or more components such that those are not visible outside, it may be difficult for a user to know at which part of the apparatus each component is located at. It may also be possible that some components are not easily accessible. Thus, it might be beneficial that the one or more components may be connected to a computing unit connected to or comprised in the apparatus and the computing unit is configured to define settings of the components comprised in the apparatus. In order to access the settings of the components in a meaningful and user-friendly manner, it may be beneficial to visually render the settings available in the computing unit in a more descriptive manner than just as a listing comprising text. Therefore, it may be beneficial to connect to the computing unit by a device capable of rendering visual augmented reality content and thereby visually render the settings such that at least some of the settings rendered in a location associated with the apparatus. For example, at the location of a component the setting is relevant to.

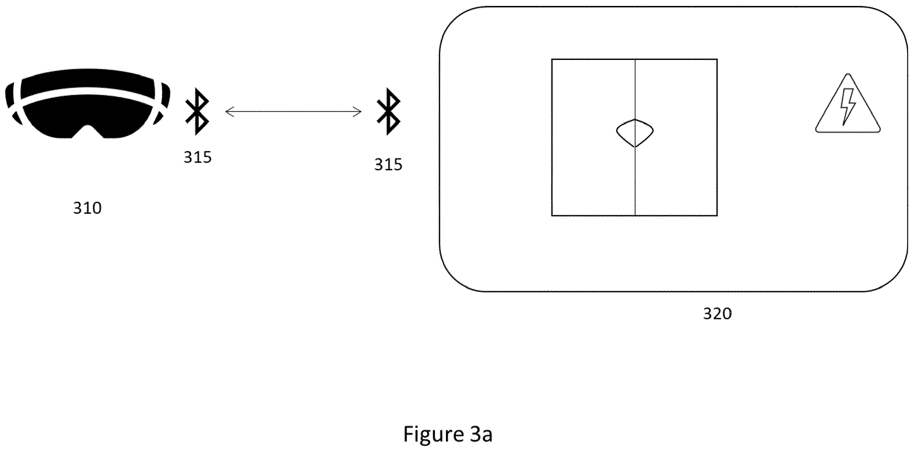

Figure 3a illustrates an exemplary embodiment in which an apparatus 310 is a head-mounted display device capable of rendering visual augmented reality content. Alternatively, the apparatus 310 could be another device capable of rendering visual augmented reality content such as a mobile device. Apparatus 320 is an automation device that comprises a computing unit capable of digitally storing values related to parameters of the components of the apparatus 320. The computing unit is further capable of connecting to the apparatus 310 using a Bluetooth connection 315. Alternatively, the computing unit could be a separate apparatus connected to the apparatus 320. It is to be noted that in some exemplary embodiments, the apparatus 320 may comprise a plurality of apparatuses that are connected to each other.

The apparatus 320 is such that a user may commission the apparatus 320 and/or the user may provide maintenance work to the apparatus 320. To be able to commission and/or maintain the apparatus 320, the user requires an access to values of parameters associated with components of the apparatus 320 relevant to the functioning of the apparatus 320. The apparatus 320 may comprise for example a motor component and a parameter motor temperature associated with the motor and/or a cable component and a parameter output current associated with the cable. In general, parameters that are stored in the computing unit of the apparatus 320 and the values of which are indicative of the functioning of the apparatus 320 may comprise one or more of: current, voltage, rotation speed, temperature, frequency, torque, load, which may be expressed as a percentage, humidity, status, such as ok, warning, or fault, service counters and sensor values. It is to be noted that a component comprised in the apparatus 320 may have one or more parameters associated with it.

In the exemplary embodiment of Figure 3a, there is a Bluetooth connection 315 between the apparatus 310 and the apparatus 320 as the computing unit part of the apparatus 320 is capable of connecting to the apparatus 310 using Bluetooth connection 315. Alternatively, another wireless or wired connection technology could be used. In this exemplary embodiment the Bluetooth connection 315 is formed when the apparatus 310 detects a tag located in the apparatus 320 that indicates that a connection may be initiated. The tag may be for example a QR code or a bar code attached as a sticker to the apparatus 320. In order to recognize the tag, the apparatus 310 comprises or is connected to a camera and one or more image recognition algorithms that are configured to detect the tag. In some exemplary embodiments, user input may be received to confirm that the connection is to be established once the tag has been recognized. The user input may be for example user gazing at the tag for a time period exceeding a threshold value. Alternatively, or additionally, the user input may comprise voice input, gesture input and/or touch input. The tag comprises information relevant to establishing the Bluetooth connection 315. The information may comprise for example name, ID and/or a pairing key.

Once the Bluetooth connection 315 has been established, data may be transferred between the computing unit comprised in the apparatus 320 and the apparatus 310. The data may comprise parameters associated with components of the apparatus 320, values related to those parameters, in other words parameter values, and also information regarding locations of components comprised in the apparatus 320.

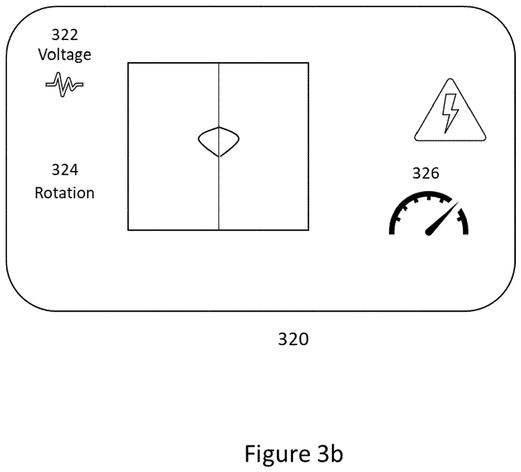

Figure 3b illustrates an exemplary embodiment of rendering data received from the computing unit by the apparatus 310, the head-mounted device. The data to be rendered is indicative of the functioning of the apparatus 320 by indicating for at least one component of the apparatus 320 at least one parameter and its value as a visual augmented reality content. In this exemplary embodiment, there are three parameters that are represented by the visual augmented reality objects 322, 324 and 326 comprised in rendered visual augmented reality content. The three parameters correspond to one or more components comprised in the apparatus 320 in this exemplary embodiment.

In order to provide a meaningful user experience and to help a user to better understand the rendered data, the visual augmented reality objects are rendered such that their location corresponds to a location of the apparatus 320 that is associated with the component the rendered visual augmented reality object is associated with. For example, a location may correspond to the location of the component within the apparatus 320 that is not visible to the user due to the housing of the apparatus 320. The location at which a visual augmented reality object is to be rendered may be provided by the computing unit of the apparatus 320. Alternatively, or additionally, the information may be available for the apparatus rendering the augmented reality content from elsewhere. For example, a default location may have been pre-stored to the memory of the apparatus rendering the visual augmented reality objects.

In order to locate the correct location at which the visual augmented reality objects are to be rendered, object recognition may be utilized. Object recognition may be achieved by utilizing a camera of the rendering apparatus and then applying one or more image recognition algorithms to the image or sequence of images obtained from the camera. Alternatively, or additionally, tag-based recognition of a relevant location may be utilized to render the visual augmented reality contents at their correct locations. The tags for the tag-based object recognition may be attached to the apparatus 320, they may be replaced and/or tags can be removed or further tags added. An object to be recognized by object recognition and a tag used in tag-based recognition may be considered as location identifiers. A location identifier is detectable by a camera. An indication regarding one or more location identifiers may be received as part of data regarding a location associated with the apparatus 320 that is received by the apparatus 310 from the apparatus 320.

It is to be noted that in some exemplary embodiments only some parameters are rendered as visual augmented reality objects at a time. For example, to avoid cluttering the field of view of the user, only a selected subset of visual augmented reality objects comprised in the augmented reality content may be rendered at a time. Additionally, or alternatively, only such augmented reality objects that are located within the user's field of view may be rendered at a time. As the user's field of view moves, the augmented reality objects no longer placed within the field of view may not be rendered anymore and, on the other hand, augmented reality objects now located within the user's field of view due to the movement are now rendered.

Although the visual augmented reality objects are rendered using a layout configuration that is as user friendly as possible, it may be that the user would prefer the rendering to be different. For example, the user may prefer certain objects to be rendered at a different location, view more information regarding some objects or perhaps not to view some objects at all. Further, the user may wish to change the units used for a parameter such as have the units of temperature as Celsius and the units for lengths as meters. In other words, the user may be allowed to make changes to the layout configuration of the rendered visual augmented reality objects.

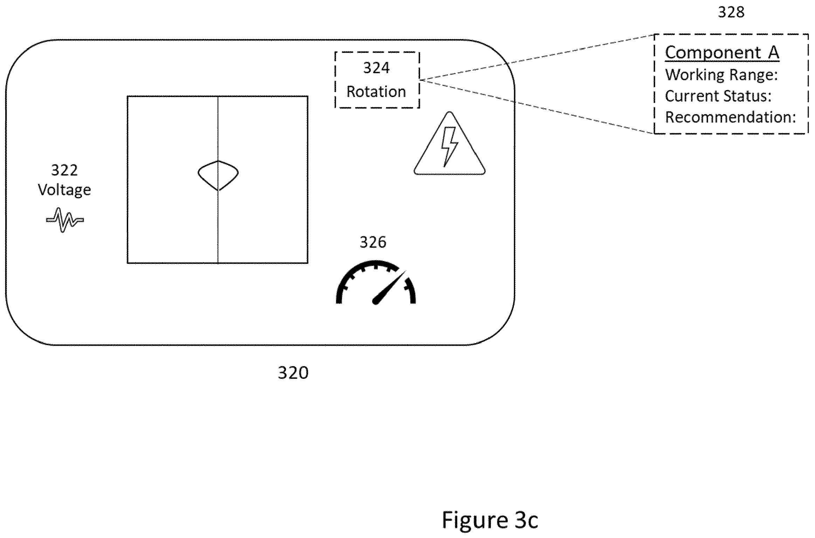

Figure 3c illustrates an exemplary embodiment in which the layout of the rendered visual augmented reality objects has been modified by the user. The user has provided input indicative of new locations for the visual augmented reality objects 322, 324 and 326. The user input may have been provided in any suitable form such as gestures, touch input and/or voice input. It may also be possible that the user has provided input indicative of changing the visual appearance of one or more of the visual augmented reality objects and the rendering has been modified according to the received user input. In some exemplary embodiments, the user may have a possibility to save the layout configuration such that the next time the user connects to the apparatus 320 with an augmented reality device, the layout is rendered according to the saved configuration. The saving of the configuration may be user initiated, by providing user input for example, or it may be automatic. The configuration could be saved to the computing unit of the apparatus 320 or alternatively or additionally, it could be saved to the apparatus rendering the augmented reality content. Further, if network connection to the Internet is available, the configuration could be saved to cloud as well.

The user may wish to see more detailed information regarding certain parameters. In such case, the user may be provided with a possibility to select a visual augmented reality object that represents the parameter the user wishes to see more information about. The selection may be done by providing user input which may be done in any suitable way. Once the visual augmented reality object, which in this exemplary embodiment is the object 324, has been selected, further information 328 is rendered by the augmented reality apparatus. This further information may be beneficial for commissioning and/or maintenance operations as it may guide the user to select correct settings, provide information regarding preferable values, provide information regarding historical values etc.

It is to be noted that in some exemplary embodiments the augmented reality objects rendered may comprise other information than that corresponding to a parameter and its value. For example, the data received from the computing unit of apparatus 320 may further comprise information such as event logs or fault logs. Such information may also be rendered as one or more visual augmented reality objects. Additionally, or alternatively, indications regarding maintenance or commissioning work to be done may be rendered as visual augmented reality objects, which may help the user to do the needed maintenance and/or commissioning work by guiding the user.

For example, a manufacturer may send an engineer to visit a customer who has bought an automation device. As the engineer visits the customer, he may be taken to a building that does not have Internet connection and in which the automation device is located at. The engineer has with him a head-mounted device capable of rendering visual objects as holograms while still allowing the engineer to see the physical environment. The engineer may now wear the head-mounted device and look at a tag that is attached to the automation device. As the head-mounted device comprises a camera to detect the surrounding environment and eye tracking, the head-mounted device recognized that there is a tag and that the user is looking at the tag. Consequently, the head-mounted device prompts a query to confirm if a connection is to be established to the automation device. The user responds to the query by a thumbs up gesture that is also recognized by the camera comprised in the head-mounted device as a confirmation that a connection is to be established.

The head-mounted device is capable of forming a Bluetooth connection and the tag that was recognized, comprises information regarding forming the connection with the automation device that is also capable of forming a Bluetooth connection. The automation device comprises data that is indicative of the functioning of the automation device. The data may comprise for example parameters associated with components and the values of those parameters as well as history data regarding maintenance, event logs and fault logs. The data may be transmitted to the head-mounted device using the Bluetooth connection that was established. The data may further indicate what part of the data is relevant to which component. Based on the received data, the head-mounted device may render data that is relevant for the engineer to the engineer's field of view as visual augmented reality content. Parameters and their values comprised in the data may be rendered as visual objects comprised in the augmented reality content at locations corresponding to the components the parameters are associated with. This helps the engineer to understand the status of the automation device by just simply looking at the device. The engineer may then select a rendered object and thereby have more data rendered visually by the head-mounted device. For example, if the engineer selects a visual object that corresponds to a motor cable, the head-mounted device may, as a response to the selection, render further data as a visual augmented reality object regarding the motor cable such as the current and waveforms and temperatures. Historical data may further be rendered. Additionally, information that guides the engineer to do the maintenance work that is needed may also be rendered. In addition to visual rendering, audio rendering may also be provided thereby enhancing the user experience and to further guide the engineer to perform the maintenance work required. The engineer may also adjust the layout of the rendered data if he so wishes. The adjusted layout may then be saved by the automation device so that the next time the engineer comes to do maintenance work, the layout is as he adjusted it to be.

In some exemplary embodiments, the apparatus rendering augmented reality content may further be capable of recognizing the user. Such recognition may be achieved for example by using face detection, fingerprint scanning or by requiring a password identifying the user. If the user is recognized, the maintenance work performed by the user may then be logged either by the apparatus for which the maintenance work is performed, by the apparatus rendering the augmented reality content or by any other suitable apparatus. Further, if the user is recognized, user specific layout configurations may be saved thereby allowing different users to automatically have the relevant content rendered in a user-specific manner. Additionally, it is possible to impose user specific access rights if the user is recognized thereby ensuring that the person doing certain maintenance work is authorized to do that maintenance work.

In some exemplary embodiments, the apparatus rendering the augmented reality content may be connected to at least two apparatuses. In such exemplary embodiment, it the apparatus rendering the augmented reality content may render the augmented reality content based on data received from the at least two apparatuses simultaneously.

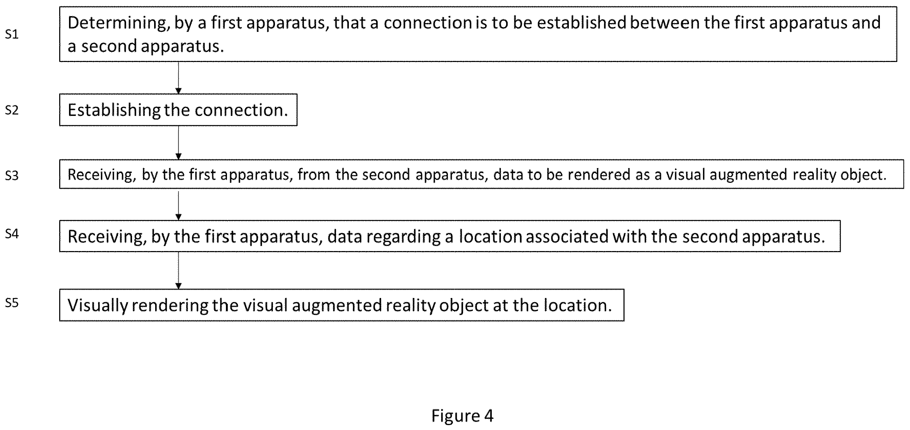

Figure 4 is a flow chart illustrating an exemplary embodiment. A first apparatus determines that a connection is to be established between the first apparatus and a second apparatus as indicated in S1 after which the connection is established as indicated in S2. The first apparatus then receives from the second apparatus, data to be rendered as a visual augmented reality object as indicated in S3. The first apparatus then receives data regarding a location associated with the second apparatus as indicated in S4. The received the visual augmented reality object at the location as indicated in S5.

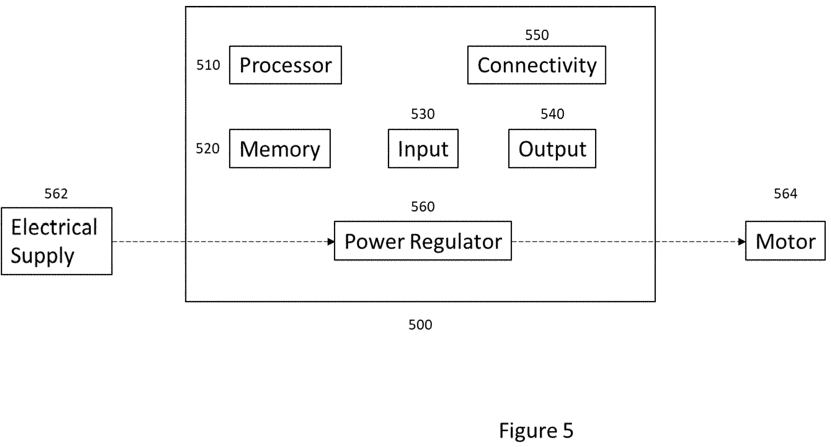

Figure 5 illustrates an example embodiment of an apparatus 500. The apparatus 500 in this exemplary embodiment is a computing unit that may be comprised in or connected to another apparatus such as an automation device. The units illustrated in Figure 5 are logical units illustrating the functionalities of the apparatus 500 and the implementation of the functionalities may vary in different embodiments.

The apparatus 500 comprises a processor 510. The processor 510 interprets computer program instructions and processes data. The processor 510 may comprise one or more programmable processors. The processor 510 may comprise programmable hardware with embedded firmware and may, alternatively or additionally, comprise one or more application specific integrated circuits, ASICs.

The processor 510 is coupled to a memory 520. The processor is configured to read and write data to and from the memory 520. The memory 520 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 520 further stores computer readable instructions that are execute by the processor 510. For example, non-volatile memory stores the computer readable instructions and the processor 510 executes the instructions using volatile memory for temporary storage of data and/or instructions. The memory may also save data such as values.

The computer readable instructions may have been pre-stored to the memory 520 or, alternatively or additionally, they may be received, by the apparatus, via electromagnetic carrier signal and/or may be copied from a physical entity such as computer program product. Execution of the computer readable instructions causes the apparatus 500 to perform functionality described above.

In the context of this document, a memory or computer-readable media may be any non-transitory media or means that can contain, store, communicate, propagate or transport the instructions for use by or in connection with an instruction execution system, apparatus, or device, such as a computer.

The apparatus 500 further comprises, or is connected to, an input unit 530. The input unit 530 comprises one or more interfaces for receiving a user input. The one or more interfaces may comprise for example one or more motion and/or orientation sensors, one or more cameras, one or more accelerometers, one or more microphones, one or more buttons and one or more touch detection units. Further, the input unit 530 may comprise an interface to which external devices may connect to.

The apparatus 500 also comprises an output unit 540. The output unit comprises or is connected to one or more displays capable of rendering visual content such as a light emitting diode, LED, display or a liquid crystal display, LCD. The output unit 540 further comprises one or more audio outputs. The one or more audio outputs may be for example loudspeakers or a set of headphones.

The apparatus 500 may further comprise a connectivity unit 550. The connectivity unit 550 enables wired and/or wireless connectivity to external networks such as 5G, Bluetooth or Wi-Fi. The connectivity unit 550 may comprise one or more antennas and one or more receivers that may be integrated to the apparatus 500 or the apparatus 500 may be connected to. The connectivity unit 550 may comprise an integrated circuit or a set of integrated circuits that provide the wireless communication capability for the apparatus 500. Alternatively, the wireless connectivity may be a hardwired application specific integrated circuit, ASIC.

The apparatus 500 may further comprise a power regulator 560. The power regulator may be connected to an electrical supply 562 that may be located outside the apparatus 500 or alternatively, is comprised in the apparatus 500. The electrical supply provides power to the power regulator 560 which then adjusts the frequency and voltage and then supplies the power to a motor 564. The motor may be located outside the apparatus 500 or it may be comprised in the apparatus 500.

It is to be noted that the apparatus 500 may further comprise various component not illustrated in the Figure 5. The various components may be hardware component and/or software components or a combination thereof.

It will be obvious to a person skilled in the art that, as the technology advances, the inventive concept can be implemented in various ways. The invention and its embodiments are not limited to the examples described above but may vary within the scope of the claims.

## Claims

1. A method comprising:
determining, by a first apparatus, that a connection is to be established between the first apparatus and a second apparatus;
establishing the connection;
receiving, by the first apparatus from the second apparatus, data to be rendered as a visual augmented reality object;
receiving, by the first apparatus, data regarding a location associated with the second apparatus; and
rendering the visual augmented reality object at the location.

2. A method according to claim 1 wherein the data regarding the location comprises an indication of a location identifier that is detectable by a camera comprised in the first apparatus.

3. A method according to any previous claim, wherein the location corresponds to a location of a component comprised in the second apparatus.

4. A method according to any previous claim, wherein the determining that a connection is to be established is based on, at least partly, the first apparatus detecting a tag.

5. A method according to any previous claim, wherein the first apparatus comprises eye-tracking.

6. A method according to any previous claim, further comprising receiving further data from the second apparatus that is to be rendered as one or more further visual augmented reality objects and rendering, by the first apparatus the one or more further visual augmented reality objects.

7. A method according to any previous claim wherein the connection is a wireless connection.

8. A method according to claim 7, wherein the wireless connection is a Bluetooth connection, a Wi-Fi connection or a 5G connection.

9. A method according to any previous claim, wherein the second apparatus comprises a computing unit.

10. A method according to any previous claim wherein rendering of the visual augmented reality content is modified responsive to user input.

11. A method according to claim 10 wherein the modified visual augmented reality content is saved.

12. A method according to any previous claim, wherein the first apparatus is a head-mounted device.

13. A system comprising a first apparatus and a second apparatus, wherein the system is configured to perform the method according to any of claim 1 to 12.

14. An apparatus comprising means for
determining that a connection is to be established between the apparatus and a second apparatus;
establishing the connection;
receiving, from the second apparatus, data to be rendered as a visual augmented reality object;
receiving data regarding a location associated with the second apparatus; and
rendering the visual augmented reality object at the location.

15. A computer product program which when executed by a computing apparatus causes the apparatus to perform a method according to any of claim 1 to 12.
